# EUROPÄISCHE PATENTSCHRIFT

(11) **EP 2 191 483 B1**
(45) Veröffentlichungstag und Bekanntmachung des Hinweises auf die Patenterteilung: **20.05.2020**
(21) Anmeldenummer: 08832339.9
(22) Anmeldetag: 17.09.2008
(51) Int. Cl.: H01G 4/30, H01G 4/012

(54) **ELEKTRISCHES VIELSCHICHTBAUELEMENT**
ELECTRICAL MULTILAYER COMPONENT
COMPOSANT ÉLECTRIQUE MULTICOUCHE

(30) Priorität: 18.09.2007 DE 102007044453
(43) Veröffentlichungstag der Anmeldung: 02.06.2010
(73) Patentinhaber: TDK Electronics AG, 81671 München (DE)
(72) Erfinder: PECINA, Axel, A-8543 St. Martin (AT); SCHLAUER, Gerald, A-8041 Graz (AT); FEIEL, Gernot, A-8501 Lieboch (AT)
(74) Vertreter: Epping - Hermann - Fischer
(86) Internationale Anmeldenummer: PCT/EP2008/062394
(87) Internationale Veröffentlichungsnummer: WO 2009/037292

(56) Entgegenhaltungen:
- JP-A- 2 086 109
- JP-A- 9 148 175
- JP-A- 2000 138 129
- US-A1- 2006 215 350
- US-A1- 2007 025 056

## Beschreibung

### Elektrisches Vielschichtbauelement

Es wird ein elektrisches Vielschichtbauelement mit hoher Biegefestigkeit angegeben.

Aus JP 09-266126 ist ein elektrisches Vielschichtbauelement bekannt. Aus US 2006/0215350 A1, JP 9 148175 A und US 2007/025056 A1 sind jeweils Schichten mit hoher Biegefestigkeit bekannt, die oberhalb und unterhalb eines Stapels von Innenelektroden angeordnet sind. Eine zu lösende Aufgabe besteht darin, ein Vielschichtbauelement mit erhöhter Biegefestigkeit anzugeben.

Es wird ein elektrisches Vielschichtbauelement mit einem Stapel von übereinander liegenden dielektrischen Schichten und Elektrodenschichten gemäß Anspruch 1 angegeben, wobei ein elektrisch isoliertes Versteifungselement von zumindest einer Elektrodenschicht beabstandet auf derselben dielektrischen Schicht angeordnet ist, wie die Elektrodenschicht. Das Versteifungselement weist eine höhere Biegefestigkeit auf, als das sie umgebende dielektrische Material.
Das Vielschichtbauelement weist eine sich insbesondere in Dickenrichtung auswirkende erhöhte Biegefestigkeit auf. Das bedeutet, dass es bei stirnseitigen Krafteinwirkungen, die lateral zueinander versetzt sein können und dadurch eine Scherwirkung hervorrufen, in reduziertem Maße gebogen wird.

Das Aufbringen einer oder mehrerer elektrisch nicht aktiver Verstärkungselemente in der Ebene einer Elektrodenschicht im Stapel des Vielschichtbauelements erlaubt die Realisierung verhältnismäßig niedriger Kapazitätswerte unter Vermeidung einer Abnahme der Biegefestigkeit des Vielschichtbauelements.

### Mit der beschriebenen Konstruktion wird ein

Vielschichtbauelement mit einer niedrigen Anzahl von Elektrodenschichten und besonders dünn ausführbaren dielektrischen Schichten geboten, es aber gleichzeitig eine hohe Biegefestigkeit aufweist. Die Anzahl der dielektrischen Schichten muss nicht erhöht werden, um die Biegefestigkeit des Vielschichtbauelements zu erhöhen.

Eine erhöhte Biegefestigkeit des Vielschichtbauelements könnte während seines Transports bzw. während seiner Herstellung von Vorteil sein, wo es insbesondere stirnseitigen Krafteinwirkungen ausgesetzt wird. Beispielsweise könnte dies beim Greifen des Bauelements für den Transport bzw. für die Montage auf eine Leiterplatte stattfinden. Die erhöhte Biegefestigkeit führt dabei zur einer erhöhten Resistenz gegenüber Beschädigungen, wie beispielsweise gegenüber dem Abknicken bzw. Abbrechen von dielektrischen Schichten bzw. Elektrodenschichten.

Da das Versteifungselement in demselben Herstellungsschritt auf eine dielektrische Schicht des Stapels aufgebracht werden kann, wie eine Elektrodenschicht, wird darüber hinaus die Anzahl der zur Herstellung des Vielschichtbauelements nötigen Prozessschritte vorteilhafterweise reduziert.

Vorzugsweise weist das zumindest eine Versteifungselement bzw. die Versteifungsstruktur eine Form auf, die längsseitig parallel zur Elektrodenschicht auf derselben dielektrischen verläuft. Insbesondere kann sie als Streifen ausgebildet sein. Neben ihren elektrisch isolierenden Eigenschaften ist die Versteifungsstruktur vorzugsweise auf allen Seiten unkontaktiert bzw. von dielektrischem Material umgeben.

Die Versteifungsstrukur ist gemäß einer Ausführungsform als Schicht auf einer dielektrischen Schicht ausgebildet. Sie kann jedoch auch in der dielektrischen Schicht vergraben sein.

Gemäß einer Ausführungsform weist das Vielschichtbauelement mit Elektrodenschichten kontaktierte elektrische, als Schicht ausgebildete Außenkontakte auf, die jeweils Elektrodenschichten eines gemeinsamen elektrischen Pols kontaktieren. Es können jedoch auch Außenkontakte in der Form von Stiften oder Drähten vorgesehen sein.

In Stapelrichtung benachbarte Elektrodenschichten gegensätzlichen elektrischen Pols können zusammen mit einer dielektrischen Schicht eine Kapazität bilden. Gegenpolige Elektrodenschichten können in Stapelrichtung relativ zueinander kammartig übereinander angeordnet sein und in orthogonaler Projektion vorhandene Überlappflächen aufweisen. Jede Elektrodenschicht ist an einem Ende mit einem Außenkontakt verbunden und mit dem anderen Ende vom gegenpoligen Außenkontakt beabstandet.

Neben einer jeden Elektrodenschicht können mehrere Versteifungsstrukturen auf derselben dielektrischen Schicht angeordnet sein. Beispielsweise ist zu einer Seitenfläche des Vielschichtbauelements hin eine Versteifungsstruktur und zur anderen Seitenfläche hin eine weitere Versteifungsstruktur angeordnet. Zu beiden Seitenflächen hin können mehrere, voneinander beabstandete Versteifungsstrukturen angeordnet sein. Die Seitenflächen sind dabei diejenigen, an denen kein Außenkontakt angeordnet ist. Dadurch wird die Wahrscheinlichkeit von Kurzschlüssen zwischen dem Außenkontakt und einer gegenpoligen Elektrodenschicht vermieden.

Gemäß einer Ausführungsform des Vielschichtbauelements enthalten die Versteifungsstrukturen ein gleiches Material, wie es in einer Elektrodenschicht enthalten sein könnte. Dabei kann es sich um ein elektrisch leitfähiges Material handeln, wie zum Beispiel Metall. Entsprechend der Menge des in der Versteifungsstruktur enthaltenden, elektrisch leitfähigen Materials ist diese auf der dielektrischen Schicht von den Elektrodenschichten und von den Außenkontakten beabstandet angeordnet bzw. räumlich von diesen getrennt.

Ist dagegen die Versteifungsstruktur in hohem Maße elektrisch isolierend, kann der Abstand zu den Elektrodenschichten und den Außenkontakten minimiert werden. Das hat den Vorteil, dass die Versteifungsstruktur eine größere Fläche aufweisen könnte und dadurch dem Vielschichtbauelement eine noch höhere Biegefestigkeit geboten wird. Gleichzeitig wird durch die elektrisch isolierende Eigenschaft der Versteifungsstruktur die Wahrscheinlichkeit eines elektrischen Übersprechens zwischen den Elektrodenschichten bzw. den Außenkontakten reduziert.

Die Versteifungsstrukturen weisen die Materialeigenschaft auf, besonders hitzebeständig zu sein. Dabei überstehen sie vorzugsweise Temperaturen zwischen 900 C und 1300 C.
Insbesondere soll die Struktur und Steifigkeit der Versteifungsstruktur während der Herstellung des Vielschichtbauelements, beispielsweise während einer Temperaturbehandlung wie zum Beispiel Sintern, erhalten bleiben.

Gemäß einer Ausführungsform enthalten die Versteifungsstrukturen ein vorzugsweise elektrisch isolierendes keramisches Material mit einer höheren Biegefestigkeit, als das umliegende Material der dielektrischen Schichten. Vorzugsweise sind die Sinterschwundeigenschaften der Versteifungsstrukturen an das Trägermaterial bzw. an das dielektrische Material, auf dem die Versteifungsstrukturen angeordnet sind bzw. eingebettet sind, angepasst.

Neben reinem Elektrodenmaterial, wie zum Beispiel Silber, Silber-Palladium, Silber-Platin, Palladium, Platin, Nickel oder Kupfer, können andere Materialien in der Versteifungsstruktur enthalten sein. Beispielsweise kann eine Versteifungsstruktur zusammen mit dem Elektrodenmaterial ein Zusatz des keramischen Grundmaterials des Schichtstapels, d.h. der Keramik, die für die keramischen Schichten des Stapels verwendet wird, enthalten. So kann der Zusatz gewählt sein aus zumindest einem der Materialien Bariumtitanat, Barium-Neodymtitanat, Zinkoxid, Kobalt-Mangan-Spinell. Es können darüber hinaus nichtstöchiometrische Varianten des keramischen Grundmaterials als Zusatz für die Versteifungsstruktur verwendet werden, beispielsweise um deren Sinterschwund zu modifizieren. So können im keramischen Schichtstapel gezielt innere Spannungen induziert werden. Vorzugsweise wird dabei eine Zugspannung induziert, d.h., die Versteifungsstruktur bzw. deren aufgedruckter keramischer Zusatz weist einen leicht höheren Schwund auf als das keramische Grundmaterial des Stapels.

Eine Weiterbildung des elektrischen Vielschichtbauelements sieht vor, dass eine Masseelektrode auf einer dielektrischen Schicht des Stapels angeordnet ist und an einem Ende mit einem an einer Außenfläche des Stapels angeordneten Massekontakt kontaktiert ist. Der Massekontakt könnte dabei auf derselben Außenfläche des Vielschichtbauelements zwischen den die Elektrodenschichten kontaktierenden Außenkontakten angeordnet sein. Es könnten mehrere Masseelektroden zwischen jeweils nebeneinander angeordneten dielektrischen Schichten bzw. Elektrodenschichten angeordnet sein. Eine Masseelektrode kann vorteilhafterweise dazu genutzt werden, dem Vielschichtbauelement ein günstiges Filterverhalten zu verleihen, wobei sie Überspannungen bzw. damit einhergehende hochfrequente Störungen ableiten kann und dadurch das Vielschichtbauelement vor Überbeanspruchung schützt. Es kann neben jeder Masseelektrode eine Versteifungsstruktur angeordnet sein.

Neben einer Masseelektrode können auch andere Schaltelemente im Vielschichtbauelement integriert sein, wie zum Beispiel Widerstandsstrukturen oder Induktivitäten bzw. Streifenleitungen. Eine Kombination solcher Schaltelemente zusammen mit den Versteifungsstrukturen bietet die Möglichkeit, ein Vielschichtbauelement mit einer Vielzahl von Filterfunktionen bei gleichzeitig erhöhter Biegefestigkeit zu schaffen.

Gemäß einer Ausführungsform ist die Außenfläche des Stapels zumindest teilweise passiviert. Die Passivierung des Stapels hat den Vorteil, die Materialien des Stapels, beispielsweise die dielektrischen Schichten, Elektrodenschichten oder die Funktionsschichten des Stapels, vor äußeren chemischen oder mechanischen Einflüssen zu schützen. Dadurch können konstantere elektrische Kennwerte des Vielschichtbauelements erreicht werden.

Gemäß einer Ausführungsform ist die Passivierung des Stapels bzw. des Vielschichtbauelements durch eine glashaltige, auf zumindest einer Außenfläche des Stapels aufgebrachten Schicht erreicht. Die Passivierung könnte jedoch auch mittels einer keramikhaltigen Schicht auf der Außenfläche des Stapels erreicht werden. Die keramikhaltige Schicht enthält vorzugsweise eine der folgenden Materialien: ZrOₓ, MgO, AlOₓ, wobei x für eine Zahl ≥ 1 steht.

Die Elektrodenschichten des elektrischen Vielschichtbauelements enthalten vorzugsweise eine bzw. eine Legierung der folgenden Materialien: Silber, Palladium, Nickel, Kupfer. Vorzugsweise weisen die Außenkontakte, die mit den Elektrodenschichten kontaktiert sind, ein mit den Elektrodenschichten gemeinsames Material auf, welches die Kontaktierung der beiden miteinander begünstigt.

Gemäß einer Ausführungsform des Vielschichtbauelements enthalten die dielektrischen Schichten eine Kondensatorkeramik, beispielsweise aus den Klassen X7R oder COG. Derart ausgeführte und abwechselnd mit Elektrodenschichten nebeneinander angeordnete dielektrische Schichten können einen Vielschichtkondensator bilden.

Gemäß einer Ausführungsform des Vielschichtbauelements enthalten die dielektrischen Schichten eine Varistorkeramik. Ein Stapel derart geschaffener dielektrischer Schichten bildet zusammen mit Elektrodenschichten einen Vielschichtvaristor. Die Varistorkeramik umfasst vorzugsweise Zinkoxid (ZnO).

Die dielektrischen Schichten sind vorzugsweise jeweils mit einer Dicke von weniger als 1 µm bis in etwa 30 µm ausgeführt.

Gemäß einer Ausführungsform des elektrischen Vielschichtbauelements sind mehrere Stapel von Elektrodenschichten nebeneinander angeordnet, wobei die Elektrodenschichten unterschiedlicher Stapel auf gemeinsamen dielektrischen Schichten angeordnet sein können. Mit dieser Konstruktion weist das Vielschichtbauelement ein Array von Vielschichtstrukturen auf, welche alle in demselben Vielschichtbauelement angeordnet sein können. Da das Vielschichtbauelement vorzugsweise monolithisch aufgebaut ist, bedeutet dies, dass mehrere Vielschichtstrukturen als Array in einem einzigen Stapel bzw. Grundkörper monolithisch enthalten sein können. Neben den Elektrodenschichten einer jeden Vielschichtstruktur können ein oder mehrere Versteifungsstrukturen der beschriebenen Art angeordnet sein. Insbesondere bei einem als Array mit Vielschichtstrukturen ausgeführten Vielschichtbauelement, wo Stapel von Elektrodenschichten nebeneinander angeordnet sind und daher die Flächenausdehnung des Vielschichtbauelements größer wird, ist es von besonderem Vorteil, wenn dem Vielschichtbauelement mittels der Versteifungsstrukturen eine erhöhte Biegefestigkeit geboten wird.

Die Stapel von Elektrodenschichten können sowohl in Längsrichtung als auch lateral nebeneinander angeordnet sein.

Beispielsweise können als Vielschichtstrukturen im selben Vielschichtbauelement ein Vielschichtvaristor und ein Vielschichtkondensator integriert sein.

Mit integrierten Widerständen sowie mittels der Elektrodenschichten und Varistorkeramik enthaltenden dielektrischen Schichten in einer Arraybauweise könnte das Vielschichtbauelement als Π-Filter ausgeführt sein.

Gemäß einer Ausführungsform enthalten die dielektrischen Schichten ein nichtlinear resistives Material, beispielsweise ein NTC- oder ein PTC-Material. Wenn mehrere solche dielektrische Schichten abwechselnd mit Elektrodenschichten nebeneinander angeordnet sind, kann eine Vielschicht-NTC-Struktur bzw. eine Vielschicht-PTC-Struktur geschaffen werden, wobei die Vielschichtstrukturen mit den bereits anderen genannten Vielschichtstrukturen in demselben Vielschichtbauelement integriert sein könnten.

Die obigen, in einem gemeinsamen Stapel von dielektrischen Schichten integrierten Vielschichtstrukturen, deren dielektrischen Schichten eine Varistorkeramik, Kondensatorkeramik oder ein NTC- oder PTC-Material enthalten, können elektrische Vielschichtbauelemente mit einer gegebenenfalls Vielzahl von elektrischen Funktionen erzeugen, die dabei dennoch eine kleine Baugröße bei hoher Biegefestigkeit aufweisen.

Die beschriebenen Gegenstände werden anhand der folgenden Figuren und Ausführungsbeispiele näher erläutert. Dabei zeigt:
- Figur 1: eine Draufsicht auf ein Vielschichtbauelement mit elektrisch isolierenden Versteifungsstrukturen,
- Figur 2: eine seitliche Querschnittsansicht des mit der Figur 1 in der Draufsicht gezeigten Vielschichtbauelements.

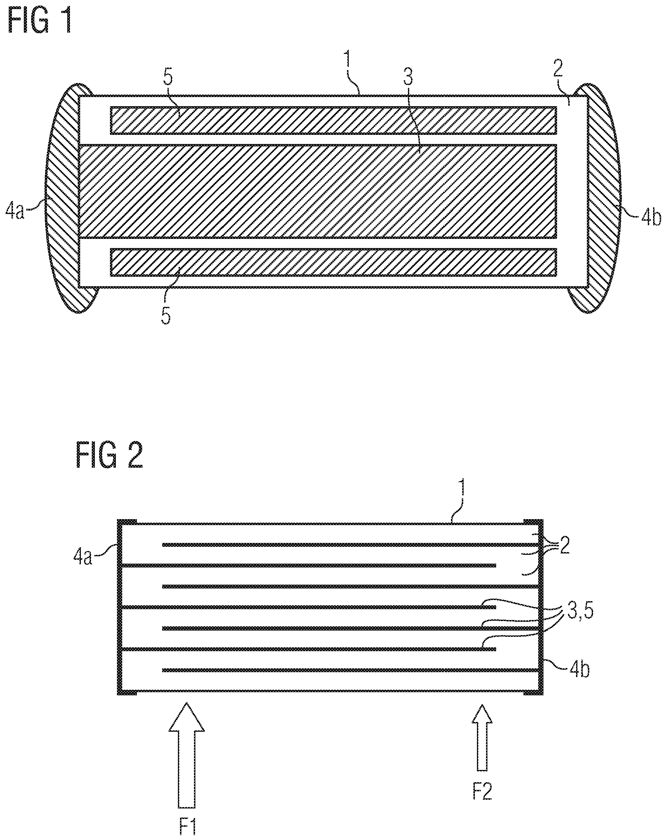

Figur 1 ist eine Schnittansicht auf eine Ebene eines als Vielschichtkondensator ausgeführten Vielschichtbauelements. Das Vielschichtbauelement umfasst einen Stapel 1 von übereinander angeordneten dielektrischen Schichten 2 und Elektrodenschichten 3. Die Elektrodenschichten 3 sind als längliche Rechtecke geformt und jeweils an einem Ende mit einem gleich gepolten Außenkontakt 4a bzw. 4b kontaktiert. Neben jeder Elektrodenschicht 3 ist eine längliche Versteifungsstruktur 5, enthaltend das gleiche Material wie die Elektrodenschicht, beispielsweise Palladium oder eine Legierung dessen mit einem anderen elektrisch leitenden Material, angeordnet. Sie reicht in etwa von einer Isolierzone, wo sich gegenpolige Elektrodenschichten in orthogonaler Projektion nicht überlappen, zur lateral gegenüberliegenden Isolierzone des Vielschichtbauelements. Auf allen Seiten ist die Versteifungsstruktur 5 vom dielektrischen Material umgeben und kann daher als "schwebende" Versteifungsstruktur betrachtet werden. Die in der Draufsicht gezeigte Anordnung wiederholt sich zumindest teilweise über die Höhe des Stapels 1. Deck- bzw. bodenseitig kann der Stapel 1 mit weiteren Keramikschichten oder mit einer glashaltigen Schicht (nicht gezeigt) zur Passivierungszwecken versehen sein.

Figur 2 ist ein Längsschnitt des mit der Figur 1 gezeigten Vielschichtbauelements, wobei die Stapelweise von Elektrodenschichten 3 und dielektrischen Schichten 2 sowie neben den Elektrodenschichten in derselben Ebene angeordneten Versteifungsstrukturen 5 gezeigt wird. Auch werden Außenkontakte 4a, 4b gezeigt, welche als Streifen auf Seitenflächen des Vielschichtbauelements eingebrannt werden können. Wahlweise können die Außenkontakte das Vielschichtbauelement seitlich umklammern, sodass sie ihm bodenseitig Kontaktierungsmöglichkeiten verleihen.

Es werden Pfeile F1 und F2 gezeigt, die verschiedene Krafteinwirkungen auf das Vielschichtbauelement darstellen. Wird das Vielschichtbauelement einer ersten Krafteinwirkung F1, bezogen auf die laterale Abmessung des Vielschichtbauelements, auf seiner ersten Hälfte, und auf seiner zweiten Hälfte einer zweiten Krafteinwirkung F2 mit geringerer oder größerer Stärke, ausgesetzt, so entstehen im Vielschichtbauelement mechanische Spannungen, die ihn bzw. seine Bestandteile beschädigen könnte. Die Kräfte könnten lateral versetzt aus unterschiedlichen Richtungen stammen bzw. in unterschiedliche Richtungen führen, wie beispielsweise eine erste Kraft auf die Deckseite und eine zweite Kraft auf die Bodenseite des Vielschichtbauelements. Mittels der Versteifungsstrukturen weist das Vielschichtbauelement eine ausreichend hohe Biegefestigkeit auf, um die zumindest während seiner Herstellung und während seines Transports stattfindenden mechanischen Krafteinwirkungen schadlos zu überstehen.

### Bezugszeichenliste

- 1: Stapel von dielektrischen Schichten und Elektrodenschichten
- 2: dielektrische Schicht
- 3: Elektrodenschicht
- 4a: erster Außenkontakt
- 4b: zweiter Außenkontakt

- F1: erste stirnseitig einwirkende Kraft
- F2: zweite stirnseitig einwirkende Kraft

## Patentansprüche

1. Elektrisches Vielschichtbauelement mit einem Stapel (1) von übereinander angeordneten dielektrischen Schichten (2) und Elektrodenschichten (3) und aufweisend ein elektrisch isoliertes Versteifungselement (5), wobei das Versteifungselement (5) eine erhöhte Biegefestigkeit aufweist als ein es umgebendes dielektrisches Material, **gekennzeichnet dadurch, dass** das Versteifungselement (5) von zumindest einer Elektrodenschicht beabstandet auf derselben dielektrischen Schicht angeordnet ist wie die Elektrodenschicht.

2. Vielschichtbauelement nach Anspruch 1, bei dem das Versteifungselement (5) eine höhere Biegefestigkeit aufweist, als die neben ihm angeordnete Elektrodenschicht (3) .

3. Vielschichtbauelement nach einem der Ansprüche 1 oder 2, bei dem das Versteifungselement (5) elektrisch isolierendes Material enthält.

4. Vielschichtbauelement nach Anspruch 3, bei dem das Versteifungselement (5) keramisches Material enthält.

5. Vielschichtbauelement nach einem der Ansprüche 1 oder 2, bei dem das Versteifungselement (5) elektrisch leitendes Material enthält und von der Elektrodenschicht (3) elektrisch isoliert ist.

6. Vielschichtbauelement nach Anspruch 5, bei dem das Versteifungselement (5) das gleiche Material enthält, wie die Elektrodenschichten (3).

7. Vielschichtbauelement nach einem der vorhergehenden Ansprüche, bei dem neben einer Längsseite einer Elektrodenschicht (3) ein sich in Längsrichtung erstreckendes Versteifungselement (5) angeordnet ist.

8. Vielschichtbauelement nach einem der vorhergehenden Ansprüche, bei dem entlang einer Längsseite einer Elektrodenschicht (3) mehrere Versteifungselemente (5) angeordnet sind.

9. Vielschichtbauelement nach einem der vorhergehenden Ansprüche, bei dem das Versteifungselement (5) als Schicht auf eine dielektrische Schicht (2) aufgebracht ist.

10. Vielschichtbauelement nach einem der vorhergehenden Ansprüche, bei dem die dielektrischen Schichten (2) eine Kondensatorkeramik enthalten.

11. Vielschichtbauelement nach einem der Ansprüche 1 bis 9, bei dem die dielektrischen Schichten (2) eine Varistorkeramik enthalten.

12. Vielschichtbauelement nach einem der Ansprüche 1 bis 11, umfassend mehrere Vielschichtstrukturen, jeweils aufweisend übereinander angeordnete Stapel von Elektrodenschichten (3) und dielektrische Schichten (2), wobei die dielektrischen Schichten unterschiedlicher Vielschichtstrukturen unterschiedliche Funktionskeramiken enthalten.

13. Vielschichtbauelement nach Anspruch 12, bei dem die Vielschichtstrukturen lateral nebeneinander angeordnet sind.

14. Vielschichtbauelement nach einem der Ansprüche 12 oder 13, bei dem die Vielschichtstrukturen übereinander und lateral nebeneinander angeordnet sind.

15. Vielschichtbauelement nach einem der vorhergehenden Ansprüche, bei dem die dielektrischen Schichten (2), Elektrodenschichten (3) und das zumindest eine Versteifungselement (5) zu einem monolithischen Körper zusammengefasst sind.

## Claims

1. Electrical multilayer component comprising a stack (1) of dielectric layers (2) and electrode layers (3) arranged one above another and having an electrically insulated stiffening element (5), wherein the stiffening element (5) has an increased flexural strength with respect to a dielectric material surrounding it, **characterized in that** the stiffening element (5) is arranged at a distance from at least one electrode layer on the same dielectric layer as the electrode layer.

2. Multilayer component according to Claim 1, wherein the stiffening element (5) has a higher flexural strength than the electrode layer (3) arranged alongside it.

3. Multilayer component according to either of Claims 1 and 2, wherein the stiffening element (5) contains electrically insulating material.

4. Multilayer component according to Claim 3, wherein the stiffening element (5) contains ceramic material.

5. Multilayer component according to either of Claims 1 and 2, wherein the stiffening element (5) contains electrically conductive material and is electrically insulated from the electrode layer (3).

6. Multilayer component according to Claim 5, wherein the stiffening element (5) contains the same material as the electrode layers (3).

7. Multilayer component according to any of the preceding claims, wherein a stiffening element (5) extending in the longitudinal direction is arranged alongside a longitudinal side of an electrode layer (3).

8. Multilayer component according to any of the preceding claims, wherein a plurality of stiffening elements (5) are arranged along a longitudinal side of an electrode layer (3).

9. Multilayer component according to any of the preceding claims, wherein the stiffening element (5) is applied as a layer to a dielectric layer (2).

10. Multilayer component according to any of the preceding claims, wherein the dielectric layers (2) contain a capacitor ceramic.

11. Multilayer component according to any of Claims 1 to 9, wherein the dielectric layers (2) contain a varistor ceramic.

12. Multilayer component according to any of Claims 1 to 11, comprising a plurality of multilayer structures, each having stacks of electrode layers (3) and dielectric layers (2) arranged one above another, wherein the dielectric layers of different multilayer structures contain different functional ceramics.

13. Multilayer component according to Claim 12, wherein the multilayer structures are arranged laterally alongside one another.

14. Multilayer component according to either of Claims 12 and 13, wherein the multilayer structures are arranged one above another and laterally alongside one another.

15. Multilayer component according to any of the preceding claims, wherein the dielectric layers (2), electrode layers (3) and the at least one stiffening element (5) are combined to form a monolithic body.

## Revendications

1. Composant électrique multicouche présentant
un empilement (1) de couches diélectriques (2) et de couches d'électrode (3) disposées les unes au-dessus des autres,
un élément de renfort (5) électriquement isolé, l'élément de renfort (5) présentant une résistance à la flexion plus élevée que celle du matériau diélectrique qui l'englobe,
**caractérisé en ce que**
l'élément de renfort (5) est disposé sur la même couche diélectrique que la couche d'électrode, à distance d'au moins une couche d'électrode.

2. Composant électrique multicouche selon la revendication 1, dans lequel l'élément de renfort (5) présente une résistance à la flexion plus élevée que celle de la couche d'électrode (3) disposée à côté de lui.

3. Composant électrique multicouche selon l'une des revendications 1 ou 2, dans lequel l'élément de renfort (5) contient un matériau électriquement isolant.

4. Composant électrique multicouche selon la revendication 3, dans lequel l'élément de renfort (5) contient un matériau céramique.

5. Composant électrique multicouche selon l'une des revendications 1 ou 2, dans lequel l'élément de renfort (5) contient un matériau électriquement conducteur et est isolé électriquement de la couches d'électrode (3).

6. Composant électrique multicouche selon la revendication 5, dans lequel l'élément de renfort (5) contient le même matériau que les couches d'électrode (3) .

7. Composant électrique multicouche selon l'une des revendications précédentes, dans lequel un élément de renfort (5) qui s'étend dans le sens de la longueur est disposé à côté d'un côté longitudinal d'une couche d'électrode (3).

8. Composant électrique multicouche selon l'une des revendications précédentes, dans lequel plusieurs élément de renfort (5) sont disposés le long d'un côté longitudinal d'une couche d'électrode (3).

9. Composant électrique multicouche selon l'une des revendications précédentes, dans lequel l'élément de renfort (5) est appliqué en forme de couche sur une couche diélectrique (2).

10. Composant électrique multicouche selon l'une des revendications précédentes, dans lequel les couches diélectriques (2) contiennent une céramique de condensateur.

11. Composant électrique multicouche selon l'une des revendications 1 à 9, dans lequel les couches diélectriques (2) contiennent une céramique de varistor.

12. Composant électrique multicouche selon l'une des revendications 1 à 11, comprenant plusieurs structures multicouches qui présentent chacune un empilement de couches d'électrode (3) et de couches diélectriques (2) disposées les unes au-dessus des autres, les couches diélectriques de structures multicouches différentes contenant des céramiques fonctionnelles différentes.

13. Composant électrique multicouche selon la revendication 12, dans lequel les structures multicouches sont disposées latéralement les unes à côté des autres.

14. Composant électrique multicouche selon l'une des revendications 12 ou 13, dans lequel les structures multicouches sont disposées les unes au-dessus des autres et latéralement les unes à côté des autres.

15. Composant électrique multicouche selon l'une des revendications précédentes, dans lequel les couches diélectriques (2), les couches d'électrode (3) et au moins un élément de renfort (5) sont réunis en un corps monolithique.
